# EUROPÄISCHE PATENTSCHRIFT

(11) **EP 0 851 808 B1**
(45) Veröffentlichungstag und Bekanntmachung des Hinweises auf die Patenterteilung: **24.11.1999**
(21) Anmeldenummer: 96926355.7
(22) Anmeldetag: 17.07.1996
(51) Int. Cl.: B29C 67/24, B32B 33/00, B32B 27/20, A47B 77/02

(54) **INTEGRALES PLATTENFÖRMIGES BAUTEIL UND VERFAHREN ZU SEINER HERSTELLUNG**
INTEGRAL FLAT COMPONENT AND PROCESS FOR ITS PRODUCTION
ELEMENT INTEGRALEMENT PLAT ET PROCEDE DE FABRICATION CORRESPONDANT

(30) Priorität: 22.09.1995 DE 19535158
(43) Veröffentlichungstag der Anmeldung: 08.07.1998
(73) Patentinhaber: SCHOCK & CO. GMBH, D-73614 Schorndorf (DE)
(72) Erfinder: SCHOCK, Friedrich, sen, D-73614 Schorndorf (DE); HOCK, Klaus, D-94209 Regen (DE); GEIER, Josef, D-94209 Regen (DE); PATERNOSTER, Rudolf, D-94269 Rinchnach (DE); BIRNBECK, Walter, D-94518 Spiegelau (DE)
(74) Vertreter: Hoeger, Stellrecht & Partner
(86) Internationale Anmeldenummer: EP9603138
(87) Internationale Veröffentlichungsnummer: WO9710945

(56) Entgegenhaltungen:
- BE-A- 705 712
- FR-A- 2 088 211
- FR-A- 2 376 923
- FR-A- 2 578 188
- GB-A- 2 162 787

## Beschreibung

Die Erfindung betrifft ein integrales plattenförmiges Bauteil, insbesondere zur Verwendung als Küchenarbeitsplatte, mit einer Sichtseite und einer Rückseite, wobei die Sichtseite eine Schicht aus einer mit einem ersten, anorganischen Füllstoff gefüllte Kunststoffmatrix umfaßt, dessen spezifische Dichte größer als die spezifische Dichte der Kunststoffmatrix ist, gemäß Oberbegriff des Patentansprüchs 1 sowie ein Verfahren zur Herstellung eines platten förmigen Bauteils gemäß dem Oberbegriff des Anspruchs 21.

Die Erfindung betrifft weiterhin die Verwendung des integralen plattenförmigen Bauteils, nicht nur als Küchenarbeitsplatte, sondern auch als Trennwand, Fassadenplatte, Tischplatte, Waschtischplatte im Badbereich, Türblatt, Möbelfront oder Wandverkleidung.

Aus der BE-A 705 712 ist es beispielsweise bekannt, Sanitärgegenstände aus mit siliziumdioxidhaltigen Stoffen gefüllten Polyestermischungen herzustellen. Um beispielsweise eine Marmorierung dieses Gegenstandes zu erzielen, ist es auch möglich, diesen Gegenstand aus zwei Lagen des gefüllten Harzes mit unterschiedlicher Farbe herzustellen.

Weiterhin ist es aus der FR-A 2 376 923 bekannt, Kompositisoliermaterialien aus einer zentralen Lage mit geringer Dichte, auf die beidseitig eine Schicht mit einer größeren Dichte und einer größeren mechanischen Widerstandskraft aufgebracht ist, herzustellen. Insbesondere umfaßt die mittlere Schicht anorganische Partikel, die wärmeisolierend wirken.

Aus der GB-A 2 162 787 ist es bekannt, Gefäße, beispielsweise für die Elektrolyse, aus mit siliziumhaltigen Stoffen gefüllten synthetischen Harzen herzustellen. Die Oberfläche einer aus einem derartigen Material bestehenden Schicht wird mit einer zweiten Schicht vergütet, wobei die zweite Schicht aus demselben synthetischen Harz wie die erste Schicht besteht, wobei jedoch die Größe der Füllstoffe kleiner ist als die Größe der Füllstoffe in der ersten Schicht.

Weiterhin ist aus der FR-A 2 578 188 bekannt, in einem kontinuierlichen Verfahren zweilagige Materialien herzustellen, die aus synthetischen Harzen mit Füllstoffen bestehen. Dabei werden auf einem Förderband zwei Lagen geformt, die unterschiedliche chemische Zusammensetzungen besitzen. Anschließend wird auf dem Förderband für jede der beiden Lagen ein unterschiedlicher Füllstoff eingebracht. Eine Aushärtung erfolgt anschließend.

Aus der FR-A 2 088 211 ist weiterhin bekannt, Bauelemente auf der Basis von Polyesterharzen herzustellen, die aus Polyester mit einer relativ niedrigen Viskosität und einem Füllstoff mit einem hohen Gewicht bestehen, so daß sich beim Aushärten der Füllstoff in Richtung der Unterseite der Gußform absetzt, so daß zwei Lagen entstehen, wobei die eine vollkommen frei von Füllstoff und die andere an der Unterseite der Gußform mit Füllstoff angereichert ist. Es ist mit dieser Methode ebenso möglich, mehrlagige Schichten herzustellen.

Integrale plattenförmige Bauteile der eingangs beschriebenen Art sind in vielfältiger Form bekannt, beispielsweise aus der DE-38 32 351-A1, gemäß der ein Harz mit einem zumindest überwiegend von Quarzpartikeln gebildeten Füllstoff in den im Gebrauch stark beanspruchten Bereichen des Bauteils eine dichtere Packung des Füllstoffs als auf der Rückseite des Bauteils aufweist.

Dieses Ziel wird durch ein verfahren erreicht, wobei man bei der in die Form gefüllten Gießmasse aus Harz und Füllstoff den Füllstoff zumindest zu einem gewissen Grad absitzen läßt, und somit eine Anreicherung an der die beanspruchten Bereiche enthaltenden Sichtseite des Bauteils erzielt.

Mit diesem Verfahren kann man Bauteile mit sehr guten Gebrauchseigenschaften herstellen, weshalb diese Bauteile auch eine breite Akzeptanz am Markt gefunden haben, insbesondere in Form von Spülen. Zu den sehr guten Gebrauchseigenschaften zählen insbesondere die Abriebfestigkeit, die Kratzbeständigkeit, die Reinigungsfreundlichkeit sowie auch das bei einer entsprechender Auswahl des Füllstoff granitartige Aussehen der Sichtseite.

Diese positiven Gebrauchseigenschaften sind vor allem auch bei plattenförmigen Materialien, wie z.B. Arbeitsplatten im Küchenbereich, Waschtischplatten im Badbereich, etc. von hohem Wert, jedoch hat sich herausgestellt, daß es sehr schwierig oder gar unmöglich ist, bei größeren Abmessungen des Bauteils eine gute Planarität zu gewährleisten. Darüber hinaus liegt die Dichte solcher Bauteile deutlich über der Dichte, die üblicherweise für Spanplatten erhalten werden, und führt so bei Arbeitsplattenstärken von 20 bis 40 mm zu nur sehr schwer handhabbaren Bauteilen.

Werden einmal in der Produktion planare Bauteile erhalten, dann beobachtet man spätestens bei Temperaturwechseln eine Krümmung der Platte, und zwar bei Temperaturwechseln, wie sie häufig beim Transport solcher Platten im Lkw vorkommen, bei dem sehr häufig eine Lagerung (beispielsweise über Nacht im Lkw) bei Temperaturen zwischen -15 und -20° C (zum Beispiel in skandinavischen Ländern) vorkommt, während tagsüber bei entsprechender Besonnung im Transporter Temperaturen von bis zu 80° C erreicht werden können. Schon geringe Haltezeiten bei unterschiedlichen Temperaturen, beispielsweise im Stundenbereich, reichen aus, um zu einer dauerhaften und nicht mehr rückführbaren Verformung der Platte zu führen, so daß das Bauteil nach dem Transport nicht mehr verwendbar ist.

Alternativ hierzu sind natürlich Spanplatten als Träger mit einer dünnen gefüllten Kunststoffschicht vorstellbar, wobei die gefüllte Schicht eine ähnliche Zusammensetzung wie die Sichtseite der oben beschriebenen Bauteile aufweist. Problematisch bei dieser Schichtbauweise ist, daß die Gesamtplatte schlecht verarbeitbar ist, da im Prinzip unterschiedliche Werkzeuge notwendig sind, um die Sichtseite (dünne gefüllte Schicht) einerseits und die Spanplatte andererseits zu be- oder verarbeiten. Darüber hinaus hat die Spanplatte den Nachteil, daß sie bei höheren Luftfeuchtigkeitswerten und insbesondere bei direktem Kontakt mit Wasser quillt, so daß diese Art von Platten vor allem in Feuchträumen und insbesondere auch gerade im Küchenbereich allenfalls unter Vorbehalten verwendet werden können. Ähnliches gilt für Spanplatten mit dekorativer HPL-Oberfläche.

Aufgabe der vorliegenden Erfindung ist es, eine integrale Platte mit ähnlichen Gebrauchseigenschaften, aber in einfacher Weise mit guter Planarität herstellbar und mit großer Schichtdicke vorzuschlagen, wobei die Platte vorzugsweise noch mit einem niedrigen spezifischen Gewicht und darüber hinaus vorzugsweise mit einer Verschraubbarkeit ausgestattet ist, wie sie für herkömmliches Spanplattenmaterial gilt.

Vorzugsweise sollte eine Platte auch gegenüber erhöhter Luftfeuchtigkeit und insbesondere direkten Kontakt mit Wasser unempfindlich sein.

Diese Aufgabe wird bei einem integralen plattenförmigen Bauteil der eingangs erwähnten Art erfindungsgemäß dadurch gelöst, daß der Volumenanteil des ersten Füllstoffs am Volumen der Sichtseitenschicht 50 bis 90 Vol. % beträgt, daß die Rückseite eine Schicht umfaßt, welche aus einer mit einem zweiten anorganischen Füllstoff gefüllten Kunststoffmatrix gebildet ist, wobei der Anteil der Kunststoffmatrix in dieser Schicht in Vol. % zahlenmäßig maximal 20 % von dem Volumenanteil der Kunststoffmatrix in der Sichtseitenschicht abweicht und wobei die spezifische Dichte des zweiten Füllstoffs kleiner oder gleich 0,6 g/cm³ ist.

Bei einer solchen Platte ist zum einen sichergestellt, daß auf der Sichtseitenschicht ein ausreichend großer Füllstoffanteil vorhanden ist, um die guten Gebrauchseigenschaften, wie sie vom Stand der Technik her bekannt sind, zu gewährleisten, während andererseits die Ausgestaltung der Rückseitenschicht mit einem in Vol. % nur wenig abweichenden Anteil der Kunststoffmatrix, verglichen mit der Sichtseitenschicht, nicht nur dafür sorgt, daß die Platten in relativ einfacher Weise mit sehr guter Planarität herstellbar sind, sondern darüber hinaus noch die Planarität der Platte bei Temperaturwechseln mit Temperaturunterschieden von 100° C aufrecht erhalten bleibt.

Durch die geringe Dichte des zweiten Füllstoffs wird die relativ hohe Dichte des Füllstoffs auf der Sichtseite quasi kompensiert, so daß Bauteile mit einer spezifischen Gesamtdichte von ca. 0,7 g/cm³ (typischer Wert für herkömmlich verwendete Spanplatten) erzielbar sind.

Im Hinblick auf eine erwünschte Langzeitstabilität der Planarität des plattenförmigen Bauteils sollte man zwischen der Sichtseitenschicht und der Rückseitenschicht eine Zone vermeiden, die im wesentlichen keine Füllstoffe umfaßt, d.h. also aus im wesentlichen reinem Kunststoff besteht. Falls trotzdem mit solchen Rezepturen gearbeitet werden soll, wird zur besseren Stabilisierung der Planarität des plattenförmigen Bauteils ein etwas höherer Vol. %-Anteil des Polymers auf der Sichtseitenschicht gewählt, so daß hier ein Spannungsausgleich erfolgen kann.

Die Ursache für im Bauteil auftretende Spannungen, insbesondere bei Temperaturwechselbelastung, rührt insbesondere daher, daß die die Kunststoffmatrix bildenden Polymere einen um ein vielfaches größeren Wärmeausdehnungskoeffizient aufweisen als die typischerweise verwendeten anorganischen Füllstoffe. Selbstverständlich kann man im Hinblick darauf auch mit einer Variation der Schichtdicken und des Verhältnisses der Schichtdicken zueinander einen gewissen Ausgleich schaffen.

Die Rückseitenschicht, insbesondere in Teilen, die nicht zunächst der Rückseitenoberfläche liegen, kann durchaus Hohlräume wie Poren umfassen, was einer weiteren Gewichtsverminderung der Platte bzw. einer Reduzierung des spezifischen Gewichts der Gesamtplatte dient. Wichtig ist aber auch in diesem Fall, daß der Anteil der Kunststoffmatrix in der Rückseitenschicht benachbart zur Oberfläche in Vol. % zahlenmäßig um maximal 20 % von dem Volumenanteil der Kunststoffmatrix in der Sichtseitenschicht abweicht.

Vorteile bei der Produktion des erfindungsgemäßen Bauteils im Hinblick auf den gewünschten integralen Schichtaufbau erhält man, wenn man zwischen der Sichtseitenschicht und der Rückseitenschicht eine Schicht anordnet, welche Verstärkungsfasern in einer Kunststoffmatrix umfaßt. Die Verstärkungsfasern können lose verteilt in der Kunststoffmatrix vorliegen oder aber ein mit Kunststoff getränktes Faservlies oder -gewebe oder dergleichen sein. Eine besonders einfache Herstellungsweise für das erfindungsgemäße plattenförmige Bauteil wird ermöglicht, wenn die Rückseitenschicht und die Sichtseitenschicht durch eine Zone getrennt sind, welche eine Sperrschicht umfaßt, die für die die Kunststoffmatrix der Sichtseitenschicht bildenden Monomere im wesentlichen undurchlässig ist, welche jedoch vorzugsweise eine kovalente Bindung mit der Kunststoffmatrix der Sichtseitenschicht und/oder der Rückseitenschicht eingehen kann.

Bei der Herstellung des erfindungsgemäßen integralen plattenförmigen Bauteils wird die Aushärtung der Gießmassen vorzugsweise von der Sichtseite aus gestartet, wie dies bei dem obengenannten Stand der Technik ebenfalls vorgesehen ist. Um auf der Sichtseitenschicht möglichst eine lunkerfreie Schicht zu erhalten, sollte verhindert werden, daß bei der sich bei der Polymerisationsreaktion normalerweise auftretenden Temperaturerhöhung Monomergasblasen bilden und/oder Monomer in die Rückseitenschicht diffundiert und dadurch monomerverarmte Bereiche in der Sichtseitenschicht entstehen läßt, da diese zum Teil von der Sichtseite her sichtbar sein und dem Bauteil ein fehlerhaftes Aussehen verleihen können.

Durch die Verwendung einer Sperrschicht, die insbesondere in Form einer Acrylatpolymer-, ABS-, Polystyrol-, PVC-, Polyvinylacetat-, Polypropylen-, einer Polyethylen-, einer Polyurethan- oder Polyesterfolie vorliegen kann, verhindert man auf der Sichtseitenschicht, daß sich in der geschlossenen Form Monomergasblasen bilden können, und erzielt so eine im wesentlichen poren- und lunkerfreie Sichtseitenschicht, falls gewünscht, zum Teil von beträchtlicher Dicke.

Wichtig ist jedoch, daß sich die Sperrschicht, insbesondere die als Sperrschicht vorgeschlagene Folie mit dem Kunststoffmatrixmaterial der Sichtseitenschicht und der Rückseitenschicht so verbindet, daß ein stabiles integrales plattenförmiges Bauteil erhalten wird. Vorzugsweise wird hier eine Sperrschicht verwendet, welche kovalente Bindungen mit der Kunststoffmatrix sowohl der Sichtseitenschicht als auch der Rückseitenschicht während der Aushärtephase eingehen kann.
Um die Sperrschicht in Form der Folie dünn halten zu können, um so die Bauteileigenschaften möglichst unbeeinflußt zu lassen, kann auf der der Sichtseite abgewandten Seite der Sperrschicht eine Schutzschicht angebracht werden, die das weitere Einbringen der zweiten Gießmasse in die Form erleichtert. Diese Schutzschicht weist insbesondere die Form eines Faservlieses, besonders bevorzugt die Form eines Glasfaservlieses, auf.

Als Schutzschicht können auch Papiervliese, Gewebe aus Natur- oder Kunstfasern, Glasfasern als solche und anderes fungieren, wobei jeweils nur wichtig ist, daß die Schutzschicht von dem Monomer der zweiten Kunststoffmatrix getränkt werden kann, so daß eine ausreichende Einbindung in das integrale Bauteil stattfindet.

Für den ersten Füllstoff kommen insbesondere mineralische Füllstoffe mit einer Mohshärte ≥ 4 in Betracht und diese umfassen vorsingsweise SiO₂-Materialien, insbesondere Quarz, Cristobalit, Tridymit, Glas oder dergleichen, Aluminiumoxid, Keramikmaterialien, Siliciumnitrid, Siliciumcarbid und Granit. Alternativ kann auch auf Materialien, die eine geringere Härte aufweisen, zurückgegriffen werden, wie zum Beispiel Aluminiumhydroxid oder Marmor.

Bevorzugt wird der erste Füllstoff in granularer und/oder Blättchenform verwendet, wobei im Falle von granularen Füllstoffen eine Korngröße von bis zu 5 mm möglich ist.

Dem ersten Füllstoff bzw. der ersten Gießmasse können bei Bedarf Pigmente zum Erzielen besonderer Farbeffekte beigegeben werden.

Bei dem Schichtaufbau des Bauteils sollte darauf geachtet werden, daß die Sichtseitenschicht eine Dicke von mindestens ca. 1 mm aufweist, welche andererseits wiederum bereits ausreichend ist, um eine ausreichende Festigkeit für die Gewährleistung der eingangs genannten günstigen Gebrauchseigenschaften zu erreichen.

Bei bevorzugten integralen plattenförmigen Bauteilen besteht die Kunststoffmatrix der Sichtseitenschicht im wesentlichen aus Acrylatpolymer, Polyester oder einem Epoxyharz. Im Prinzip sind auch andere Kunststoffmatrizes möglich, jedoch haben sich vorgenannte, insbesondere im Hinblick auf den Verwendungszweck, als Arbeitsplatten im Küchenbereich oder Waschtischplatten im Badbereich auf dem Markt durchgesetzt.

Die Auswahl der Materialien für die Kunststoffmatrix der Rückseitenschicht ist zunächst einmal im Prinzip unabhängig von der Materialauswahl der Sichtseitenschicht für die Kunststoffmatrix, wird jedoch vorzugsweise ebenfalls im wesentlichen aus Acrylatpolymer, Polyester oder einem Epoxyharz bestehen, weiter bevorzugt aus demselben Material wie die Kunststoffmatrix der Sichtseitenschicht.

Der zweite Füllstoff wird bevorzugt aus Materialien wie z.B. Hohlglaskugeln, Blähton, geschäumtes Glas, geschäumtes Gesteinsmehl, Bimskies, Bimssand, keramische Hohlkugeln, Metallkugeln oder Leichtfüllstoffe, welche unter den Warenbezeichnungen Sil-cel (Firma Norwegian Talk) oder Q-cel (Firma Omya) erhältlich sind, ausgewählt.

Bei einer weiter bevorzugten Ausführungsform des Bauteils wird der zweite Füllstoff im Gemisch mit Verstärkungsfasern, flammhemmenden Mitteln und/oder Mitteln zur Beeinflussung der Leitfähigkeit verwendet, wodurch sich die Eigenschaften des Bauteiles auf spezielle Einsatzzwecke anpassen lassen.

Bevorzugt wird der zweite Füllstoff ebenfalls in granularer Form eingesetzt und weist eine mittlere Korngröße im Bereich von 50 µm bis 10 mm auf, vorzugsweise von 100 µm bis 4 mm.

Bei einer weiter bevorzugten Ausführungsform der Erfindung wird der Anteil der Füllstoffpartikel mit einer Korngröße kleiner 20 µm beim zweiten Füllstoff kleiner 20 Vol. % gewählt.

Die zwischen der Sichtseitenschicht und der Rückseitenschicht vorhandene Zone weist bei bevorzugten Ausführungsformen einen polymerverarmten Bereich mit einer Schichtdicke auf, welche gleich oder größer der Schichtdicke der Sichtseitenschicht ist, wobei der Polymeranteil des polymerverarmten Bereichs mindestens ca. 30 Gew. % geringer ist als in der Sichtseitenschicht.

Aufgrund der extrem hohen Planarität der erfindungsgemäßen integralen plattenförmigen Bauteile und insbesondere auch deren gute mechanische Eigenschaften, insbesondere deren Biegefestigkeit, welche problemlos 10 N/mm² betragen kann, eignen sich diese Bauteile insbesondere zur Verwendung als Trennwände, Fassadenplatten, Tischplatten oder Arbeitsplatten im Küchenbereich, Waschtischplatten im Badbereich, Türblätter, Möbelfronten oder Wandverkleidungen, gegebenenfalls sogar als Fußbodenbelag.

Maßgebend zu diesem breiten Eignungsspektrum trägt zum einen eine leicht erreichbare Gesamtdichte von 0,7 g/cm³ oder weniger bei, ebenso wie die verschleißfeste, fleckfeste, temperaturbeständige, kratzunempfindliche Oberfläche der Sichtseite bzw. die hohe Schraubauszugfestigkeit (gemäß RAL-RG 716/1; Entwurf April 1993) sowie die Möglichkeit, ohne Vorbohren das Bauteil mit Schrauben zu befestigen, die die Rückseite des Formteils aufweist.

Für den Einsatzzweck in feuchten Räumen, insbesondere im Küchen- und Badbereich, ist die Eigenschaft der erfindungsgemäßen Bauteile, mit Wasser nicht quellbar zu sein, von besonderer Bedeutung.

Die Erfindung betrifft ferner ein Verfahren zur Herstellung eines plattenförmigen Bauteils mit einer Sichtseite und einer Rückseite,
wobei in eine Gießform eine Füllstoffpartikel umfassende Gießmasse eingebracht wird, dadurch gekennzeichnet, daß
a) zur Bildung der Sichtseitenschicht die Gießform mit einer ersten aushärtbaren Gießmasse befüllt wird, welche einen ersten Sirup mit einem ersten Monomeren und einen ersten Füllstoff enthält,
b) anschließend die Gießform mit einer zweiten aushärtbaren Gießmasse, welche einen zweiten Sirup mit einem zweiten Monomeren enthält, und mit einem zweiten anorganischen Füllstoff befüllt wird, wobei der zweite Füllstoff zusammen mit der zweiten Gießmasse die Rückseitenschicht bildet;
c) die Gießform geschlossen wird; und
d) die Aushärtung der ersten und der zweiten Gießmasse, beginnend auf der Sichtseite des Bauteils initiiert wird,
   wobei der erste Füllstoff eine größere spezifische Dichte als der Sirup der ersten Gießmasse aufweist und wobei der zweite Füllstoff eine spezifische Dichte ≤ 0,6 g/cm³ aufweist.

Es sei an dieser Stelle darauf hingewiesen, daß gemäß Schritt b) das Befüllen der Gießform mit der zweiten aushärtbaren Gießmasse und Einfüllen des anorganischen Füllstoffs in beliebiger Reihenfolge erfolgen kann. Die einzelnen Bestandteile, d.h. Gießmasse und Füllstoff, können getrennt oder als Mischung eingebracht werden.

Bei einer besonders bevorzugten Ausführungsform des erfindungsgemäßen Verfahrens wird nachfolgend zu Schritt a) eine Sperrschicht auf der die Sichtseitenschicht bildenden ersten Gießmasse ausgebildet, welche beim späteren Aushärten der Gießmassen verhindert, daß Monomer aus der ersten Gießmasse verdrängt wird und Gasblasen auf der bzw. in der Sichtseitenschicht bildet. Die Sperrschicht ist in wesentlichen für das erste Monomere undurchlässig und mit der Sichtseitenschicht sowie der Rückseitenschicht fest verbindbar und verhindert einen Transport und damit eine Anreicherung von gasförmigem und flüssigem ersten Monomeren zur Rückseitenschicht hin und sorgt so für eine im wesentlichen massive und lunkerfreie Ausbildung der Sichtseitenschicht.

Solche Schichten Lassen sich nach dem Aushärten und der Entformung des Bauteiles polieren, womit zusätzliche Effekte im Aussehen der Sichtseitenschicht erzielt werden und die Gebrauchseigenschaften erhöht werden können. Hierdurch läßt sich insbesondere erreichen, daß sich die Oberfläche zum direkten darauf Arbeiten, zum Beispiel Schneiden, eignet, ohne daß dabei die Messer stumpf werden.

Die einfachste Form des Befüllens der Gießform mit der zweiten Gießmasse und dem zweiten Füllstoff besteht darin, daß zunächst der Sirup der zweiten Gießmasse und nachfolgend in einem gesonderten Schritt der zweite Füllstoff gleichmäßig in die Gießform eingefüllt wird. Aufgrund der geringen Dichte des zweiten Füllstoffes schwimmt dieser zunächst obenauf und sinkt mit zunehmender Befüllung der Gießform mit zweitem Füllstoff in die zweite Gießmasse ein.
Von besonderer Bedeutung für eine gleichmäßige Qualität der Sichtseitenschicht ist es, wenn die erste Gießmasse mit einer gleichmäßigen Schichtdicke in der Form verteilt wird.

Der erste Sirup der Mischung besteht vorzugsweise aus einem Monomeren und einem darin vorzugsweise gelösten Präpolymeren, was sich insbesondere dann empfiehlt, wenn Acrylatsysteme verwendet werden, um den Schrumpf der Polymervolumina beim Aushärten zu begrenzen.

Acrylate und Alkylacrylate, die im Zusammenhang mit der vorliegenden Erfindung besonders geeignet sind, sind im Detail beispielsweise in der DE-24 49 656 beschrieben.

Zur Erzielung besonders guter Oberflächeneigenschaften auf der Sichtseite wird der erste Füllstoff vor dem vollständigen Aushärten der ersten Gießmasse in der Form absetzen gelassen, vergleichbar zu der in der DE-38 32 351-A1 beschriebenen Weise. Der Absetzvorgang kann bei Bedarf durch eine Rüttelbewegung unterstützt werden.

Um eine Gasblasenbildung aus verdampfendem Monomer während der Aushärtephase zu verhindern, wird vorzugsweise als Sperrschicht eine Folie, vorsingsweise mit einer Dicke von 10 bis 100 µm, verwendet, wobei die Folie eine Polypropylen-, Polyethylen-, eine Polyurethan- oder Polyesterfolie ist. Folien anderer Zusammensetzungen können selbstverständlich auch verwendet werden, wobei lediglich die Voraussetzung ist, daß sich die Folie in ausreichender Weise mit der Sichtseitenschicht einerseits und der auf der anderen Oberfläche aufzubringenden Rückseitenschicht andererseits verbindet, so daß ein festes integrales Bauteil erhalten wird. Vorzugsweise wird eine feste Verbindung während dem Aushärteprozeß der Sichtseitenschicht und der Rückseitenschicht der jeweiligen Gießmassen mit der Sperrschicht bzw. der Folie der Sperrschicht gebildet. Um die Folie bei dem nachfolgenden Aufbringen der zweiten Gießmasse bzw. insbesondere des zweiten Füllstoffs gegen mechanische Beeinträchtigungen zu schützen, umfaßt die Sperrschicht vorzugsweise auf der zur Rückseitenschicht weisenden Oberfläche eine Schutzschicht in Form eines Gewebes oder eines Vlieses, insbesondere eines Glasfaservlieses. Das Vlies wird vorzugsweise so ausgewählt, daß es sich leicht mit der zweiten Gießmasse benetzen und tränken laßt, so daß auch durch das Einbringen der Schutzschicht in Form eines Vlieses oder Gewebes verhindert wird, daß sich hier eine Solltrennstelle in dem integralen Bauteil bildet.

Wie für die erste Gießmasse bereits diskutiert, ist auch bei der zweiten Gießmasse eine Mischung aus einem Monomer und einem Präpolymer bevorzugt. Für die Auswahl des Monomers bzw. des Präpolymers gilt das oben im Zusammenhang mit der ersten Gießmasse Gesagte.

Ferner gilt für das zweite Monomer, daß dieses vorzugsweise einen Siedepunkt von ≤ 145° C aufweist und vorzugsweise ein Acrylat, ein Alkylacrylat, bifunktionelle Acrylate, ein Styrol oder ein Dien ist.

Bei dieser Auswahl des zweiten Monomers wird sichergestellt, daß im Verlauf der Aushärtereaktion, die auf der Sichtseite beginnt, eine ausreichend hohe Temperatur im Inneren der Form erreicht wird, damit das zweite Monomer verdampft und nachfolgend an der Rückseite der Form kondensiert und dort im Verlauf des Aushärteprozesses aushärtet und den Kunststoffmatrixanteil der oberflächlichen Rückseitenschicht bildet. Auf diese Weise wird eine Oberfläche der Rückseitenschicht erzielt, welche im wesentlichen frei von Hohlräumen ist, während im Inneren des Bauteils, d.h. weiter abliegend von der Rückseitenoberfläche, ein polymerverarmter Bereich erzielt wird.

Die Auswahl des zweiten Füllstoffs konzentriert sich im wesentlichen auf Hohlkörper und/oder porose materialien, welche vorzugsweise aus SiO₂-Materialien aufbauen.

Das Aushärten der Gießmassen wird vorzugsweise durch eine Temperaturerhöhung der Gießform auf der Sichtseite initiiert, wobei der erste und der zweite Sirup Peroxide und/oder Azoverbindungen als Initiatoren für die Aushärtereaktion enthalten.

Bevorzugt wird, wie oben erwähnt, das Aushärten temperaturmäßig so gesteuert, daß das zweite Monomer verdampft und/oder verdrängt und am Gießformteil benachbart zur Rückseite des Bauteils angereichert wird, wobei vorzugsweise eine Temperatur im Inneren der Rückseitenschicht von ≥ 140° C erreicht wird.

Zum Erzielen höchst planarer Bauteile ist es wichtig, daß diese bei gleicher Temperatur von Sichtseite und Rückseite unter den Siedepunkt des am niedrigsten siedenden Monomers abgekühlt werden. So wird sichergestellt, daß bei geschlossener Form, d.h. unter Druckbedingungen, noch der Siedepunkt des am niedrigsten siedenden Monomeren unterschritten und auch dieses Monomer kondensiert und in den Aushärteprozeß einbezogen wird. Damit lassen sich extrem niedrige Restmonomergehalte in dem Bauteil erzielen, was sich beispielsweise an einem fehlenden "Kunststoffgeruch" des Bauteils bemerkbar macht.

Bevorzugt wird ferner das Bauteil erst nach im wesentlichen vollständiger Aushärtung der ersten und der zweiten Gießmasse aus der Form entnommen. Auch diese Maßnahme dient der Erzielung höchster Planarität des Bauteils.

In besonderen Anwendungsfällen ist es von Vorteil, wenn vor dem Schließen der Form ein Glasfaservlies auf die Schüttung des zweiten Füllstoffs aufgebracht wird und so einen Teil der Rückseitenoberfläche bildet. Durch das oben beschriebene bevorzugte Herstellungsverfahren kondensiert das zweite Monomer nicht nur an der Rückseitenoberfläche, sondern gelangt in kondensierter Form auch in das Glasfaservlies, so daß dieses im wesentlichen vollständig in die Rückseitenoberfläche integriert und eingebunden wird.

Aufgrund des erfindungsgemäßen Aufbaus des integralen planaren Bauteils und insbesondere durch die Auswahl des ersten und des zweiten Füllstoffs entsteht ein bifunktionelles Bauteil mit gänzlich unterschiedlichen Eigenschaften auf der Sicht- und Rückseite. Die Sichtseite weist, wie aus der DE-38 32 351 bekannt, eine ausgezeichnete Gebrauchstauglichkeit, beispielsweise im Küchenbereich, etc., auf und ist insbesondere hoch verschleißfest, während die Rückseite eine deutlich niedrigere Dichte hat und vor allem gut schraubbar ist, was sich an einer besonders guten Schraubauszugsfestigkeit, wie sie im folgenden noch zu diskutieren sein wird, zeigt. Im Hinblick auf die Schraubauszugsfestigkeit und Biegefestigkeit hat sich insbesondere die Aufbringung eines Vlieses auf die Rückseitenschicht vor dem Schließen der Form bewährt.

Ein besonders bevorzugtes erfindungsgemäßes integrales plattenförmiges Bauteil weist eine im folgenden näher beschriebene Schichtstruktur auf, wobei der Begriff 'Schichtstruktur' eher als eine Folge von ineinander übergehender, nicht klar abgrenzbarer Zonen zu verstehen ist:
Die Sichtseitenschicht beinhaltet benachbart zur Gebrauchsoberfläche eine Schicht, welche einen hohen Anteil an mineralischen Füllstoffen (erster Füllstoff) in einer PMMA-Matrix aufweist. Die Korngröße ist in großen Bereichen variierbar, und der Füllstoffanteil in dieser Schicht liegt im Bereich zwischen 50 und 90 Vol. %. Vorzugsweise weist diese Schicht einen Wärmeausdehnungskoeffizienten von 20 bis 40·10⁻⁶/° C auf. Hieran kann sich eine weitere Schicht oder Zone anschließen, welche eine Dichte zwischen 1,3 bis 2,2 g/cm³ aufweist und welche die vorbeschriebene Folie und das eingelegte Glasfasergewebe bzw. -vlies umfaßt. Diese Zone beinhaltet ca. 80 Gew. % PMMA, 0,1 Gew. % Folienmaterial und 19,9 % feinere Anteile des ersten Füllstoffs.

Darauf folgend zeichnet sich eine Zone mit einer sehr geringen Dichte von ca. 0,4 g/cm³ ab, welche im wesentlichen aus einem Leichtfüllstoff, wie z.B. Hohlkörper, etc., besteht, wobei die Partikel des Leichtfüllstoffs miteinander über PMMA-Brücken verbunden sind. Die Größe der Hohlkörper des Leichtfüllstoffs sind in weiten Bereichen wählbar. Der Acrylanteil beträgt volumenmäßig ca. 20 % entsprechend einem Gewichtsanteil von ca. 50 %.

Daran anschließend findet man als außenliegende Rückseitenoberflächenschicht eine Schicht, welche einen Großteil an Leichtfüllstoff bzw. der Hohlkörper beinhaltet, wobei die Dichte dieser Schicht sich erheblich von der vorhergehenden Zone unterscheidet. Die Dichte steigt hier auf einen Wert von ca. 0,6 g/cm³ an, der Acrylanteil in dieser Schicht beträgt ca. 35 Vol. % oder 65 Gew. %. Der Leichtfüllstoff ist hier in Form eines geschäumten Glases (erhältlich unter der Warenbezeichnung "Poraver" bei der Firma Dennert, Schlüsselfeld) verwendet. Die Folie verhindert, daß das Acrylatmonomer während der Polymerisation der Sichtseitenschicht in die Poraver-Schicht migriert und auf der Sichtseitenschicht bzw. in der Sichtseitenschicht Lunker und Hohlräume bildet. Die Folie selber darf allerdings nicht als Trennschicht fungieren, weil ansonsten die Sichtseitenschicht und die Rückseitenschicht mechanisch trennbar werden. Dies geschieht allerdings erst, wenn Folien von zu großer Dicke verwendet werden und/oder wenn diese mit den aushärtenden Gießmassen keine ausreichende Verbindung, insbesondere keine kovalente Bindung, eingehen können. Die Folie muß einerseits dünn genug sein, andererseits jedoch mechanisch stabil genug, so daß keine Löcher durch das Auftragen des geschäumten Glases (Poraver) in die Folie gedrückt werden können. Um hier sehr dünne Folien verwenden zu können, kann als Lösung dieses Problems eine weitere Schicht eines Vlieses, insbesondere aus Glasfasern, auf diese Folie aufgebracht werden, welche die Folie schützt und stabilisiert. Dies trägt zudem noch zu einer gleichmäßigen Dicke der Sichtseitenschicht bei. Wählt man die Größe der Partikel des ersten Füllstoffs so und entsprechend auch die Viskosität des ersten Sirups, daß der erste Füllstoff absitzen kann, entsteht benachbart zu der Sichtseitenoberflächenschicht eine an Füllstoff verarmte Sirupschicht, welche mit einer hohen Wärmefreisetzung reagiert.

Die unmittelbar nach der Folie liegende zweite Sirupschicht beginnt aufgrund der Wärmeentwicklung in der Sichtseitenschicht zu polymerisieren. Die nach der Folie aufgetragene Schicht aus zweiter Gießmasse und zweitem Füllstoff beinhaltet ein relativ großes Gasvolumen, in dem das Methylmethacrylatmonomer verdampfen kann, sobald die Polymerisationstemperatur auf der Sichtseitenschicht ausreichend hoch wird. Das verdampfte Methylmethacrylat kondensiert zum einen an den Poraver-Kugeln (geschäumtes Glas) sowie zum anderen an der Rückseite der Form. Die auftretende Schaumbildung des zweiten Sirups trägt die Polymerisation bis in die Kondensatschicht auf der Rückseite der Form, wo das kondensierte Monomere eine durchgehende Schicht bildet. Durch eine entsprechende Temperatursteuerung beim Aushärten, insbesondere einem gleichmäßigen Abkühlen der Vorder- und und der Rückseite bis zu einer Temperatur unter dem Siedepunkt des Monomeren (hier ca. 120° C), kann man einen äußerst geringen Restmonomeranteil erreichen. Durch die Isolierwirkung der Poraver-Kugeln bleibt eine Temperatur von mehr als 140° C im Inneren des Bauteiles relativ lange Zeit erhalten und sorgt so für eine vollständige Reaktion der Monomeren. Selbstverständlich darf, um diesen Effekt ausreichend auszunutzen, nicht zu früh abgekühlt und das Bauteil nicht zu früh aus der Form entnommen werden. Wird zu früh entformt, befinden sich die inneren Bereiche des Bauteils noch im zähelastischen Zustand und der zu dem Zeitpunkt noch vorhandene MMA-Partialdruck kann das Entstehen von Blasen verursachen.

Aus dem zuvor Gesagten wird deutlich, daß bei Produktionsbeginn die Formenrückseite nicht zu heiß sein darf, da sonst eine Kondensation der Monomeranteile, die durch die Temperaturentwicklung auf der Sichtseitenschicht verdampft werden, verhindert wird sowie die Polymerisation dort verfrüht beginnt.

Im folgenden sei beispielhaft ein bevorzugtes Herstellverfahren für ein erfindungsgemäßes integrales plattenförmiges Bauteil erläutert, ebenso wie an verschiedenen Beispielen die vorzüglichen Eigenschaften der erfindungsgemäßen Bauteile.

Zur Bildung der Sichtseitenschicht wird eine Gießmasse gemäß folgender Rezeptur hergestellt:

### Rezeptur 1:

20 Gew. % eines Sirups, bestehend aus 23 Gew. % PMMA (Degalan 51/03 der Firma Degussa AG) in MMA, welcher zudem einen üblichen Vernetzer enthält;
0,2 % eines Peroxidinitiatorsystems,
   ca. 80 Gew. % eines Quarzsandes mit einer Körnung von 0,01 mm bis 1 mm.

Zur Bildung der Rückseitenschicht wird in die mit der ersten Gießmasse bereits gefüllte Form ein Sirup folgender Zusammensetzung eingefüllt:

### Rezeptur 2:

Eine 10 Gew. % PMMA enthaltende MMA-Phase, die zudem noch übliche Vernetzer enthält, werden mit einem Initiatorensystem im Gewichtsverhältnis 50:1 gemischt. Als Initiatoren können hier wie bei der vorgenannten Rezeptur beispielsweise bis-t-Butylcyclohexylperoxodicarbonat (BCHPC), Lauroylperoxid und t-Butylperbenzoat in etwa gleichen Anteilen verwendet werden.

Etwa die gleiche Gewichtsmenge wie an Sirup wird an geschäumtem Glas (zweiter Füllstoff) mit einer Dichte von 0,2 g/cm³ und einer Korngröße von 100 µm bis 4 mm in die Form eingefüllt. Bevor der Sirup mit der Rezeptur 2 (zweite Gießmasse) in die Form eingefüllt wird, wird die Schicht mit einer Folie mit einer Schichtdicke von 20 µm und danach mit einem Glasfaservlies abgedeckt. Die Füllhöhe für die Gießmasse gemäß der Sichtseitenrezeptur in der Form beträgt 7 mm und die Füllhöhe für die Gießmasse aus dem zweiten Sirup und dem geschäumten Glas beträgt ca. 33 mm. Die Form wird geschlossen und durch Wärmeanwendung auf der Sichtseite die Aushärtung des Bauteils initiiert. Die Temperaturführung wurde so gewählt, daß im Inneren des Bauteils eine Formtemperatur von mehr als 140° C auftritt, so daß das MMA der zweiten Gießmasse zu sieden anfängt und an der Gießform benachbart zur Rückseite kondensiert. Um die Aushärtung zu vervollständigen, wird nach ca. 30 Minuten die Form mit gleichen Temperaturen an der Sicht- und Rückseite langsam abgekühlt (2° C/min), bis eine Temperatur von weniger als 120° C erreicht wird. Auf dieser Temperatur bzw. unter dieser Temperatur wird die Form noch für mindestens 10 Minuten gehalten. Erst dann wird die Form geöffnet und das Bauteil ent-nommen.

Für dieses Bauteil ergeben sich im Test folgende Eigenschaften für die Sichtseite:
- Sehr gute Fleckbeständigkeit, insbesondere gegenüber Farbstoffen, Fetten oder Ölen, Laugen und Säuren etc.;
- kein Wasser-Weiß-Effekt (water whitening effect), auch nicht bei einer Wechselbeanspruchung mit heißem und kaltem Wasser (auch im poliertem Zustand).

Auf der Rückseite wird eine Schraubauszugsfestigkeit im Bereich von 50 N/mm bis 70 N/mm erhalten. Der vergleichsweise für eine gleich dicke Spanplatte erreichte Wert beträgt ca. 53 N/mm. (Küchenarbeitsplatte in Form einer Spanplatte mit HPL-Beschichtung; Firma Duropal.)

Diese erzeugten Platten in einer Abmessung von 1 m Seitenkante weisen eine Planarität auf, bei der auf eine Länge von 1 m eine maximale Abweichung von 0,5 mm gemessen werden kann. Die Bestimmung der Planarität erfolgt bei einer Temperatur von 23 ±2° C und 50 ± 5 % relative Luftfeuchte. Die bei der Bestimmung der Abweichungen angewandten DIN-Normen sind DIN 68761 und DIN 68763 bzw. DIN EN 438 in analoger Weise.

Die nach obigem Beispiel hergestellten Platten weisen im Vergleich zu ähnlich strukturierten Platten, die jedoch mit einem Klebeverfahren erhalten wurden, eine Krümmung, in der Diagonale der Platte gemessen, von maximal 1 mm auf, während verklebte Platten oder Melaminharzplatten 2,4 mm Abweichung aufweisen.

Ändert man die Rezeptur für die Sichtseite z.B. wie folgt:

### Rezeptur 3:

30 Gew. % eines Sirups, enthaltend 23 Gew. % PMMA (Degalan 51/03 der Firma Degussa AG) sowie geringe Anteile eines Vernetzers und ein Peroxidinitiatorsystem und 70 Gew. % Anteil des oben beschriebenen Quarzsandes, erhält man in der Produktion bereits gekrümmte Platten.

Produziert man eine Platte lediglich unter Verwendung der Vergleichsrezeptur für die Sichtseitenschicht und klebt diese auf entsprechende Platten, die gemäß der Rückseitenrezeptur hergestellt worden sind, auf, erhält man ebenfalls beim Temperaturwechseltest Krümmungen von 2,4 mm über die Diagonale der 1 x 1 m-Platte oder mehr.

## Patentansprüche

1. Integrales plattenförmiges Bauteil, insbesondere zur Verwendung als Küchenarbeitsplatte, mit einer Sichtseite und einer Rückseite, wobei die Sichtseite eine Schicht aus einer mit einem ersten, anorganischen Füllstoff gefüllte Kunststoffmatrix umfaßt, dessen spezifische Dichte größer ist als die spezifische Dichte der Kunststoffmatrix, dadurch gekennzeichnet, daß der Volumenanteil des ersten Füllstoffs am Volumen in der Sichtseitenschicht 50 bis 90 Vol. % beträgt, daß die Rückseite eine Schicht umfaßt, welche aus einer mit einem zweiten anorganischen Füllstoff gefüllten Kunststoffmatrix gebildet ist, wobei der Anteil der Kunststoffmatrix in dieser Schicht in Vol. % zahlenmäßig maximal 20 % von dem Volumenanteil der Kunststoffmatrix in der Sichtseitenschicht abweicht und wobei die spezifische Dichte des zweiten Füllstoffs ≤ 0,6 g/cm³ ist.

2. Bauteil nach Anspruch 1, dadurch gekennzeichnet, daß die Rückseitenschicht Poren umfaßt.

3. Bauteil nach Anspruch 1 oder 2, dadurch gekennzeichnet, daß zwischen der Sichtseitenschicht und der Rückseitenschicht eine Schicht vorhanden ist, welche Verstärkungsfasern in einer Kunststoffmatrix umfaßt.

4. Bauteil nach einem der Ansprüche 1 bis 3, dadurch gekennzeichnet, daß die Rückseitenschicht und die Sichtseitenschicht durch eine Zone getrennt sind, welche eine Sperrschicht umfaßt, die für die die Kunststoffmatrix der Sichtseitenschicht bildenden Monomere im wesentlichen undurchlässig ist, welche jedoch vorzugsweise eine kovalente Bindung mit der Kunststoffmatrix der Sichtseitenschicht und/oder der Rückseitenschicht aufweist.

5. Bauteil nach Anspruch 4, dadurch gekennzeichnet, daß die Sperrschicht eine Acrylatpolymer-, ABS-, Polystyrol-, PVC-, Polyvinylacetat-, PP-, PE-, PU- oder Polyester-Folie umfaßt.

6. Bauteil nach Anspruch 4 oder 5, dadurch gekennzeichnet, daß die Zone auf der der Sichtseite abgewandten Seite der Sperrschicht eine Schutz- oder Versteifungsschicht, insbesondere in Form eines Faservlieses, umfaßt.

7. Bauteil nach Anspruch 6, dadurch gekennzeichnet, daß das Faservlies ein Glasfaservlies ist.

8. Bauteil nach einem der Ansprüche 1 bis 7, dadurch gekennzeichnet, daß der erste Füllstoff ein mineralischer Füllstoff mit einer Mohshärte ≥ 4 ist und vorzugsweise SiO₂-Materialien umfaßt, insbesondere Quarz, Cristobalit, Glas oder dergleichen, Siliziumnitrid, Siliziumcarbid, Korund und/oder Granit.

9. Bauteil nach einem der Ansprüche 1 bis 8, dadurch gekennzeichnet, daß der erste Füllstoff granular und/oder blättchenförmig ist.

10. Bauteil nach Anspruch 9, dadurch gekennzeichnet, daß der granulare Füllstoff eine Korngröße von bis zu 5 mm aufweist.

11. Bauteil nach Anspruch 9 oder 10, dadurch gekennzeichnet, daß die Oberfläche der Sichtseitenschicht nach dem Aushärten des Bauteils poliert ist.

12. Bauteil nach einem der voranstehenden Ansprüche, dadurch gekennzeichnet, daß die Sichtseitenschicht eine Dicke von mindestens ca. 1 mm aufweist.

13. Bauteil nach einem der voranstehenden Ansprüche, dadurch gekennzeichnet, daß die Kunststoffmatrix der Sichtseitenschicht im wesentlichen aus Polyacrylaten, Polyester oder einem Epoxyharz besteht.

14. Bauteil nach einem der voranstehenden Ansprüche, dadurch gekennzeichnet, daß die Kunststoffmatrix der Rückseitenschicht im wesentlichen aus Polyacrylaten, Polyester oder einem Epoxyharz besteht.

15. Bauteil nach einem der voranstehenden Ansprüche, dadurch gekennzeichnet, daß die Partikel des zweiten Füllstoffs eine Druckfestigkeit von 5 bis 25 kN, vorzugsweise 10 bis 25 kN, aufweisen.

16. Bauteil nach einem der voranstehenden Ansprüche, dadurch gekennzeichnet, daß der zweite Füllstoff im Gemisch mit Verstärkungsfasern, flammhemmenden Mitteln und/oder Mitteln zur Beeinflussung der Leitfähigkeit verwendet wird.

17. Bauteil nach einem der voranstehenden Ansprüche, dadurch gekennzeichnet, daß der zweite Füllstoff granular ist und eine mittlere Korngröße im Bereich von 50 µm bis 10 mm aufweist, vorzugsweise von 100 µm bis 4 mm.

18. Bauteil nach Anspruch 17, dadurch gekennzeichnet, daß der Anteil der Füllstoffpartikel mit einer Korngröße ≤ 20 µm im zweiten Füllstoff < 20 Gew.% beträgt.

19. Bauteil nach einem der Ansprüche 4 bis 18, dadurch gekennzeichnet, daß die Zone einen polymerverarmten Bereich mit einer Schichtdicke aufweist, welche gleich oder größer der Schichtdicke der Sichtseitenschicht ist, wobei der Polymeranteil des polymerverarmten Bereichs mindestens ca. 30 Gew.% geringer ist als in der Sichtseitenschicht.

20. Verwendung eines Bauteils gemäß einem der Ansprüche 1 bis 19 als Trennwand, Fassadenplatte, Tischplatte oder Arbeitsplatte im Küchenbereich, Waschtischplatte im Badbereich, Türblatt, Möbelfront oder Wandverkleidung.

21. Verfahren zur Herstellung eines plattenförmigen Bauteils mit einer Sichtseite und einer Rückseite, wobei in eine Gießform eine Füllstoffpartikel umfassende Gießmasse eingebracht wird, dadurch gekennzeichnet, daß
a) zur Bildung der Sichtseitenschicht die Gießform mit einer ersten aushärtbaren Gießmasse befüllt wird, welche einen ersten Sirup mit einem ersten Monomeren und einen ersten Füllstoff enthält;
b) anschließend die Gießform mit einer zweiten aushärtbaren Gießmasse, welche einen zweiten Sirup mit einem zweiten Monomeren enthält und mit einem zweiten anorganischen Füllstoff befüllt wird, wobei der zweite Füllstoff zusammen mit der zweiten Gießmasse die Rückseitenschicht bildet;
c) die Gießform geschlossen wird; und
d) die Aushärtung der ersten und der zweiten Gießmasse, beginnend auf der Sichtseite des Bauteils initiiert wird,
wobei der erste Füllstoff eine größere spezifische Dichte als der Sirup der ersten Gießmasse aufweist und wobei der zweite Füllstoff eine spezifische Dichte ≤ 0,6 g/cm³ aufweist.

22. Verfahren nach Anspruch 21, dadurch gekennzeichnet, daß nachfolgend zu Schritt a) eine Sperrschicht auf der die Sichtseitenschicht bildenden ersten Gießmasse ausgebildet wird, wobei die Sperrschicht im wesentlichen für das erste Monomere undurchlässig ist und mit der Sichtseitenschicht sowie der Rückseitenschicht fest verbindbar ist.

23. Verfahren nach Anspruch 21 oder 22, dadurch gekennzeichnet, daß in Schritt b) zunächst der Sirup der zweiten Gießmasse und nachfolgend in einem gesonderten Schritt der zweite Füllstoff in die Gießform eingefüllt wird.

24. Verfahren nach einem der Ansprüche 21 bis 23, dadurch gekennzeichnet, daß die erste Gießmasse mit einer gleichmäßigen Schichtdicke in der Form verteilt wird.

25. Verfahren nach einem der Ansprüche 21 bis 24, dadurch gekennzeichnet, daß der erste Sirup eine Mischung aus einem Monomeren und einem Präpolymer enthält.

26. Verfahren nach einem der Ansprüche 21 bis 25, dadurch gekennzeichnet, daß das erste Monomer ein Acrylat oder Alkylacrylat ist.

27. Verfahren nach einem der Ansprüche 21 bis 26, dadurch gekennzeichnet, daß der erste Füllstoff vor dem vollständigen Aushärten der ersten Gießmasse in der Form, gegebenenfalls durch eine Rüttelbehandlung unterstützt, absetzen gelassen wird.

28. Verfahren nach einem der Ansprüche 21 bis 27, dadurch gekennzeichnet, daß als Sperrschicht eine Folie, vorzugsweise mit einer Dicke von 10 µm bis 100 µm verwendet wird, wobei die Folie eine Acrylatpolymer-, ABS-, Polystyrol-, PVC-, Polyvinylacetat-, Polypropylen-, eine Polyethylen-, eine Polyurethan- oder eine Polyesterfolie ist.

29. Verfahren nach einem der Ansprüche 21 bis 28, dadurch gekennzeichnet, daß nachfolgend auf die die Sperrschicht bildende Folie eine Schutzschicht in Form eines Gewebes oder Vlieses, insbesondere eines Glasfaservlieses, aufgebracht wird.

30. Verfahren nach einem der Ansprüche 21 bis 29, dadurch gekennzeichnet, daß die zweite Gießmasse ein Sirup in Form einer Mischung aus einem Monomer und einem Präpolymer ist, wobei der Präpolymeranteil vorzugsweise 5 bis 30 Gew. %, weiter bevorzugt 8 bis 20 Gew. %, bezogen auf die Masse des Sirups, beträgt.

31. Verfahren nach einem der Ansprüche 21 bis 30, dadurch gekennzeichnet, daß das zweite Monomer einen Siedepunkt von ≤ 145° C aufweist und vorzugsweise ein Acrylat, ein Alkylacrylat, Styrol und/oder ein Dien oder ein bifunktionelles Acrylat ist.

32. Verfahren nach einem der Ansprüche 21 bis 31, dadurch gekennzeichnet, daß der zweite Füllstoff Hohlkörper und/oder poröse Materialien umfaßt, welche vorzugsweise aus SiO₂-Materialien bestehen.

33. Verfahren nach einem der Ansprüche 21 bis 32, dadurch gekennzeichnet, daß das Aushärten durch eine Temperaturerhöhung der Gießform auf der Sichtseite initiiert wird, wobei der erste und der zweite Sirup Peroxide und/oder Azoverbindungen enthalten.

34. Verfahren nach einem der Ansprüche 21 bis 33, dadurch gekennzeichnet, daß das Aushärten temperaturmäßig so gesteuert wird, daß das zweite Monomer verdampft oder verdrängt und am Gießformteil benachbart zur Rückseite des Bauteils angereichert wird, wobei vorzugsweise eine Temperatur im Inneren der Rückseitenschicht von ≥ 140° C erreicht wird.

35. Verfahren nach einem der Ansprüche 21 bis 34, dadurch gekennzeichnet, daß das Bauteil vorzugsweise bei gleicher Temperatur von Sichtseite und Rückseite unter den Siedepunkt des am niedrigsten siedenden Monomers während des Aushärteprozesses abgekühlt wird.

36. Verfahren nach Anspruch 35, dadurch gekennzeichnet, daß das Bauteil erst nach im wesentlichen vollständiger Aushärtung der ersten und der zweiten Gießmasse aus der Form entnommen wird.

37. Verfahren nach einem der Ansprüche 21 bis 36, dadurch gekennzeichnet, daß vor dem Schließen der Form ein Glasfaservlies auf die Schüttung des zweiten Füllstoffs aufgebracht wird zur Bildung der Rückseitenoberfläche.

## Claims

1. Integral, flat component, in particular for use as a kitchen working surface, comprising a visible side and a rear side, wherein the visible side comprises a layer consisting of a polymer matrix filled with a first, inorganic filler, its specific density being greater than the specific density of the polymer matrix, characterized in that the volume content of the first filler in the volume in the visible side layer is 50 to 90 % by volume, that the rear side comprises a layer formed from a polymer matrix filled with a second, inorganic filler, wherein the proportion of the polymer matrix in this layer in % by volume differs quantitatively by 20 % at the most from the volume content of the polymer matrix in the visible side layer and wherein the specific density of the second filler is ≤ 0.6 g/cm³.

2. Component as defined in claim 1, characterized in that the rear side layer comprises pores.

3. Component as defined in claim 1 or 2, characterized in that a layer comprising reinforcing fibers in a polymer matrix is present between the visible side layer and the rear side layer.

4. Component as defined in any one of claims 1 to 3, characterized in that the rear side layer and the visible side layer are separated by a zone comprising a barrier layer, said barrier layer being essentially impermeable for the monomers forming the polymer matrix of the visible side layer but, however, preferably having a covalent bond with the polymer matrix of the visible side layer and/or of the rear side layer.

5. Component as defined in claim 4, characterized in that the barrier layer comprises a film of acrylate polymer, acrylonite butadiene styrene copolymer, polystyrene, PVC, polyvinyl acetate, polypropylene, polyethylene, polyurethane or polyester.

6. Component as defined in claim 4 or 5, characterized in that the zone on the side of the barrier layer facing away from the visible side comprises a protective or reinforcing layer, in particular in the form of a fiber fleece.

7. Component as defined in claim 6, characterized in that the fiber fleece is a glass fiber matting.

8. Component as defined in any one of claims 1 to 7, characterized in that the first filler is a mineral filler with a Mohs' hardness of ≥ 4 and preferably comprises SiO₂ materials, in particular quartz, cristobalite, glass or the like, silicon nitride, silicon carbide, corundum and/or granite.

9. Component as defined in any one of claims 1 to 8, characterized in that the first filler is granular and/or lamellar.

10. Component as defined in claim 9, characterized in that the granular filler has a grain size of up to 5 mm.

11. Component as defined in claim 9 or 10, characterized in that the surface of the visible side layer is polished after hardening of the component.

12. Component as defined in any one of the preceding claims, characterized in that the visible side layer has a thickness of at least approximately 1 mm.

13. Component as defined in any one of the preceding claims, characterized in that the polymer matrix of the visible side layer consists essentially of polyacrylates, polyester or an epoxy resin.

14. Component as defined in any one of the preceding claims, characterized in that the polymer matrix of the rear side layer consists essentially of polyacrylates, polyester or an epoxy resin.

15. Component as defined in any one of the preceding claims, characterized in that the particles of the second filler have a pressure resistance of 5 to 25 kN, preferably 10 to 25 kN.

16. Component as defined in any one of the preceding claims, characterized in that the second filler is used in a mixture with reinforcing fibers, fire-retarding agents and/or agents for influencing the conductivity.

17. Component as defined in any one of the preceding claims, characterized in that the second filler is granular and has an average grain size in the range of 50 µm to 10 mm, preferably of 100 µm to 4 mm.

18. Component as defined in claim 17, characterized in that the proportion of the filler particles with a grain size ≤ 20 µm in the second filler is < 20 % by weight.

19. Component as defined in any one of claims 4 to 18, characterized in that the zone has a polymer-depleted region with a layer thickness equal to or greater than the layer thickness of the visible side layer, wherein the polymer proportion of the polymer-depleted region is at least approximately 30 % by weight less than in the visible side layer.

20. Use of a component as defined in any one of claims 1 to 19 as a partition, facing panel, table top or working surface in the kitchen, washstand top in the bathroom, door panel, furniture front or wall paneling.

21. Process for the production of a flat component with a visible side and a rear side, wherein a casting mass comprising filler particles is introduced into a casting mold, characterized in that
a) for forming the visible side layer the casting mold is filled with a first hardenable casting mass containing a first syrup with a first monomer and a first filler;
b) subsequently, the casting mold is filled with a second hardenable casting mass containing a second syrup with a second monomer and with a second inorganic filler, wherein the second filler forms the rear side layer together with the second casting mass;
c) the casting mold is closed; and
d) the hardening of the first and the second casting masses, beginning on the visible side of the component, is initiated;
wherein the first filler has a greater specific density than the syrup of the first casting mass and wherein the second filler has a specific density of ≤ 0.6 g/cm³.

22. Process as defined in claim 21, characterized in that subsequent to step a) a barrier layer is formed on the first casting mass forming the visible side layer, wherein the barrier layer is essentially impermeable for the first monomer and is adapted to be securely bonded to the visible side layer as well as the rear side layer.

23. Process as defined in claim 21 or 22, characterized in that in step b) the syrup of the second casting mass is filled into the casting mold first of all and subsequently the second filler in a separate step.

24. Process as defined in any one of claims 21 to 23, characterized in that the first casting mass is distributed in the mold with a uniform layer thickness.

25. Process as defined in any one of claims 21 to 24, characterized in that the first syrup contains a mixture consisting of a monomer and a prepolymer.

26. Process as defined in any one of claims 21 to 25, characterized in that the first monomer is an acrylate or alkyl acrylate.

27. Process as defined in any one of claims 21 to 26, characterized in that the first filler is allowed to settle prior to the complete hardening of the first casting mass in the mold, where necessary aided by a vibratory treatment.

28. Process as defined in any one of claims 21 to 27, characterized in that a film, preferably with a thickness of 10 µm to 100 µm, is used as barrier layer, wherein the film is a film consisting of acrylate polymer, acrylonite butadiene styrene copolymer, polystyrene, PVC, polyvinyl acetate, polypropylene, a polyethylene, a polyurethane or a polyester.

29. Process as defined in any one of claims 21 to 28, characterized in that a protective layer in the form of a woven fabric or fleece, in particular a glass fiber matting, is subsequently applied to the film forming the barrier layer.

30. Process as defined in any one of claims 21 to 29, characterized in that the second casting mass is a syrup in the form of a mixture of a monomer and a prepolymer, wherein the prepolymer proportion is preferably 5 to 30 % by weight, even more preferred 8 to 20 % by weight, in relation to the mass of the syrup.

31. Process as defined in any one of claims 21 to 30, characterized in that the second monomer has a boiling point of ≤ 145°C and is preferably an acrylate, an alkyl acrylate, styrene and/or a diene or a bifunctional acrylate.

32. Process as defined in any one of claims 21 to 31, characterized in that the second filler comprises hollow bodies and/or porous materials consisting preferably of SiO₂ materials.

33. Process as defined in any one of claims 21 to 32, characterized in that the hardening is initiated by way of an increase in temperature in the casting mold on the visible side, wherein the first and the second syrups contain peroxides and/or azo compounds.

34. Process as defined in any one of claims 21 to 33, characterized in that the hardening is controlled with respect to temperature such that the second monomer is evaporated or displaced and concentrated at the part of the casting mold adjacent to the rear side of the component, wherein a temperature in the interior of the rear side layer of ≥ 140°C is preferably attained.

35. Process as defined in any one of claims 21 to 34, characterized in that the component is preferably cooled during the hardening process to below the boiling point of the monomer with the lowest boiling point with the same temperature for visible side and rear side.

36. Process as defined in claim 35, characterized in that the component is removed from the mold only after essentially complete hardening of the first and the second casting masses.

37. Process as defined in any one of claims 21 to 36, characterized in that prior to closing the mold a glass fiber matting is applied to the charge of the second filler to form the rear side surface.

## Revendications

1. Elément en forme de plaque en une seule pièce, en particulier pour une utilisation en tant que plan de travail d'une cuisine, avec un côté visible et un côté arrière, le côté visible comprenant une couche constituée d'une matrice en matière plastique chargée d'une première charge inorganique, dont la densité spécifique est supérieure à la densité spécifique de la matrice en matière plastique, caractérisé en ce que la part volumique de la première charge pour le volume de la couche du côté visible est de 50 à 90% en volume, en ce que le côté arrière comprend une couche qui est formée d'une matrice en matière plastique chargée d'une seconde charge inorganique, la part de la matrice en matière plastique dans cette couche étant différente en % en volume au maximum de 20% de la part volumique de la matrice en matière plastique dans la couche du côté visible et la densité spécifique de la seconde charge étant ≤0,6 g/cm³.

2. Elément selon la revendication 1, caractérisé en ce que la couche du côté arrière comprend des pores.

3. Elément selon la revendication 1 ou 2, caractérisé en ce qu'entre la couche du côté visible et la couche du côté arrière se trouve une couche qui comprend des fibres de renforcement dans une matrice en matière plastique.

4. Elément selon l'une quelconque des revendications 1 à 3, caractérisé en ce que la couche du côté visible et la couche du côté arrière sont séparées par une zone qui comprend une couche barrière, laquelle est essentiellement imperméable aux monomères formant la matrice en matière plastique de la couche du côté visible, laquelle présente toutefois de préférence une liaison covalente avec la matrice en matière plastique de la couche du côté visible et/ou de la couche du côté arrière.

5. Elément selon la revendication 4, caractérisé en ce que la couche barrière comprend une feuille de polymère d'acrylate, d'ABS, de polystyrène, de PVC, de poly(acétate de vinyle), de PP, de PE, de PU ou de polyester.

6. Elément selon la revendication 4 ou 5, caractérisé en ce que la zone sur le côté de la couche barrière adjacent au côté visible comprend une couche de protection ou de rigidité, en particulier dans la forme d'un non-tissé.

7. Elément selon la revendication 6, caractérisé en ce que le non-tissé est un non-tissé de fibres de verre.

8. Elément selon l'une quelconque des revendications 1 à 7, caractérisé en ce que la première charge est une charge minérale avec une dureté Mohs ≥4 et comprend de préférence des matériaux de SiO₂, en particulier du quartz, de la cristobalite, du verte ou semblable, du nitrure de silicium, du carbure de silicium, du corindon et/ou du granit.

9. Elément selon l'une quelconque des revendications 1 à 8, caractérisé en ce que la première charge est dans la forme de granulés et/ou de petites feuilles.

10. Elément selon la revendication 9, caractérisé en ce que la charge granulaire présente une taille de grains allant jusqu'à 5 mm.

11. Elément selon la revendication 9 ou 10, caractérisé en que ce la surface de la couche du côté visible est polie après le durcissement de l'élément.

12. Elément selon l'une quelconque des revendications précédentes, caractérisé en ce que la couche du côté visible présente une épaisseur d'au moins environ 1 mm.

13. Elément selon l'une quelconque des revendications précédentes, caractérisé en ce que la matrice en matière plastique de la couche du côté visible est essentiellement constituée de polyacrylates, de polyester ou d'une résine époxy.

14. Elément selon l'une quelconque des revendications précédentes. caractérisé en ce que la matrice en matière plastique de la couche du côté arrière est essentiellement constituée de polyacrylates, de polyester ou d'une résine époxy.

15. Elément selon l'une quelconque des revendications précédentes, caractérisé en ce les particules de la seconde charge présentent une résistance à la pression de 5 à 25 kN, de préférence de 10 à 25 kN.

16. Elément selon l'une quelconque des revendications précédentes, caractérisé en ce que la seconde charge est utilisée en mélange avec des fibres de renforcement, des agents ignifuges et/ou des agents destinés à influencer la conductivité.

17. Elément selon l'une quelconque des revendications précédentes, caractérisé en ce que la seconde charge est granulaire et présente une taille moyenne de grains dans le domaine de 50 µm à 10 mm, de préférence de 100 µm à 4 mm.

18. Elément selon la revendication 17, caractérisé en ce que la part des particules de charge avec une taille de grains ≤ 20 µm dans la seconde charge est < 20% en poids.

19. Elément selon l'une quelconque des revendications 4 à 18, caractérisé en ce que la zone présente un domaine appauvri en polymère avec une épaisseur de couche qui est égale ou supérieure à l'épaisseur de couche de la couche du côté visible, la part en polymère du domaine appauvri en polymère étant inférieure d'au moins environ 30% en poids à celle dans la couche du côté visible.

20. Utilisation d'un élément selon l'une quelconque des revendications 1 à 19 en tant que paroi de séparation, plateau de façade, plateau de table ou plan de travail dans le domaine de la cuisine, plan pour lavabo dans le domaine sanitaire, vantail de porte, façade de meuble ou garnissage de paroi.

21. Procédé pour la préparation d'un élément en forme de plaque présentant un côté visible et un côté arrière, une masse coulée comprenant des particules de charge étant introduite dans un moule de coulée, caractérisé en ce que
a) on remplit le moule de coulée avec une première masse coulée durcissable, laquelle contient un premier sirop avec un premier monomère et une première charge, pour former la couche du côté visible,
d) on remplit ensuite le moule de coulée avec une seconde masse coulée durcissable, laquelle contient un second sirop avec un second monomère et avec une seconde charge inorganique, la seconde charge formant avec la seconde masse coulée la couche du côté arrière;
c) on ferme le moule de coulée; et
d) on initie le durcissement de la première et de la seconde masse coulée en commençant sur le côté visible de l'élément,
la première charge présentant une densité spécifique plus importante que celle du sirop de la première masse coulée et la seconde charge présentant une densité spécifique ≤0,6 g/cm³.

22. Procédé selon la revendication 21, caractérisé en ce que l'on forme après l'étape a) une couche barrière sur la première masse coulée formant la couche du côté visible, la couche barrière étant essentiellement imperméable au premier monomère et pouvant être solidement liée avec la couche du côté visible ainsi qu'avec la couche du côté arrière.

23. Procédé selon la revendication 21 ou 22, caractérisé en ce que l'on introduit dans le moule de coulée dans l'étape b) tout d'abord le sirop de la seconde masse coulée et ensuite dans une étape particulière la seconde charge.

24. Procédé selon l'une quelconque des revendications 21 à 23, caractérisé en ce que l'on répartit la première masse coulée dans le moule avec une épaisseur de couche uniforme.

25. Procédé selon l'une quelconque des revendications 21 à 24, caractérisé en ce que le premier sirop contient un mélange d'un monomère et d'un prépolymère.

26. Procédé selon l'une quelconque des revendications 21 à 25, caractérisé en ce que le premier monomère est un acrylate ou un acrylate d'alkyle.

27. Procédé selon l'une quelconque des revendications 21 à 26, caractérisé en ce que l'on laisse se déposer la première charge avant le durcissement complet de la première masse coulée dans le moule, éventuellement à l'aide d'un mouvement de secousses.

28. Procédé selon l'une quelconque des revendications 21 à 27, caractérisé en ce que l'on utilise comme couche barrière une feuille, de préférence avec une épaisseur de 10 µm à 100 µm, la feuille étant une feuille de polymère d'acrylate, d'ABS, de polystyrène, de PVC, de poly(acétate de vinyle), de polypropylène, de polyéthylène, de polyuréthane ou de polyester.

29. Procédé selon l'une quelconque des revendications 21 à 28, caractérisé en ce que l'on applique ensuite sur la feuille formant la couche barrière une couche protectrice dans la forme d'un tissu tissé ou d'un non-tissé, en particulier d'un non-tissé de fibres de verte.

30. Procédé selon l'une quelconque des revendications 21 à 29, caractérisé en ce que la seconde masse coulée est un sirop dans la forme d'un mélange constitué d'un monomère et d'un prépolymère, la part en prépolymère étant de préférence de 5 à 30% en poids, encore mieux de 8 à 20% en poids, rapportés à la masse du sirop.

31. Procédé selon l'une quelconque des revendications 21 à 30, caractérisé en ce que le second monomère présente un point d'ébullition ≤145°C et est de préférence un acrylate, un acrylate d'alkyle, du styrène et/ou un diène ou un acrylate bifonctionnel.

32. Procédé selon l'une quelconque des revendications 21 à 31, caractérisé en ce que la seconde charge comprend des corps creux et/ou des matériaux poreux, lesquels sont de préférence constitués de matériaux de SiO₂.

33. Procédé selon l'une quelconque des revendications 21 à 32, caractérisé en ce que l'on initie le durcissement par une élévation de la température du moule de coulée sur le côté visible, le premier et le second sirop contenant des peroxydes et/ou des composés azo.

34. Procédé selon l'une quelconque des revendications 21 à 33, caractérisé en ce que l'on règle le durcissement en fonction de la température de telle sorte que le second monomère s'évapore ou se comprime et s'enrichit dans la partie du moule de coulée voisine du côté arrière de l'élément, une température à l'intérieur de la couche du côté arrière ≥140°C étant de préférence atteinte.

35. Procédé selon l'une quelconque des revendications 21 à 34, caractérisé en ce que l'on refroidit l'élément de préférence à une température identique du côté visible et du côté arrière inférieure au point d'ébullition du monomère de point d'ébullition le plus faible pendant le procédé de durcissement.

36. Procédé selon la revendication 35, caractérisé en ce que l'on prélève l'élément du moule uniquement après un durcissement pratiquement total de la première et de la seconde masse coulée.

37. Procédé selon l'une quelconque des revendications 21 à 36, caractérisé en ce que l'on applique avant la fermeture du moule un non-tissé de fibres de verte sur le remblai de la seconde charge pour la formation de la surface du côté arrière.
